# EUROPEAN PATENT APPLICATION

(11) **EP 4 016 290 A1**
(43) Date of publication of application: **22.06.2022**
(21) Application number: 21198509.8
(22) Date of filing: 23.09.2021
(51) Int. Cl.: G06F 9/30

(54) **EFFICIENT MULTIPLY AND ACCUMULATE INSTRUCTION WHEN AN OPERAND IS EQUAL TO OR NEAR A POWER OF TWO**

(30) Priority: 21.12.2020 US 202017129636
(71) Applicant: INTEL Corporation, Santa Clara, CA 95054 (US)
(72) Inventor: Ould-Ahmed-Vall, ElMoustapha, Chandler AZ, 85226 (US)
(74) Representative: Samson & Partner Patentanwälte mbB

(57) **Abstract**

Techniques and apparatuses for performing a near multiply and accumulate instruction are described. An apparatus includes decoder circuitry to decode an instruction, the instruction to include a field for an identifier of a first source operand, a field for an identifier of a second source operand, and a field for an identifier of a third source operand. The apparatus also includes execution circuitry to execute the decoded instruction to perform a multiplication of a pair of data elements from the first and second source operands to produce a product data element via a shift operation when at least one data element in the pair of data elements is equal to a power of two or near a power of two or via multiplication of the pair of data elements when the pair of data elements is neither equal to a power of two or near a power of two.

## Description

### TECHNICAL FIELD

The present disclosure generally relates to an efficient multiply and add/accumulate instruction, and more specifically, relates to a multiply and add/accumulate instruction that efficiently computes a result when an operand is equal to or near a power of two.

### BACKGROUND

Many processors have Single Instruction, Multiple Data (SIMD) architectures. SIMD architectures generally help to significantly improve processing speed. In SIMD architectures, instead of a scalar instruction operating on only one data element or pair of data elements, a vector instruction (also referred to as packed data instruction or SIMD instruction) may operate on multiple data elements or multiple pairs of data elements simultaneously or in parallel. The processor may have parallel execution hardware responsive to the vector instruction to perform the multiple operations simultaneously or in parallel.

In SIMD architectures multiple data elements may be packed within one register or memory location as packed data or vector data. In vector data, the bits of the register or other storage location may be logically divided into a sequence of multiple fixed-sized data elements. Each of the data elements may represent an individual piece of data that is stored in the register or storage location along with other data elements typically having the same size. For example, a 256-bit wide register may have four 64-bit wide vector elements, eight 32-bit wide vector elements, sixteen 16-bit wide vector elements, or thirty-two 8-bit wide vector elements. Each of the vector elements may represent a separate individual piece of data that may be operated upon separately or independently of the others.

Representatively, a vector add instruction may specify that a single vector operation (e.g., addition or multiplication) be performed on all corresponding pairs of data elements from two source vector operands to generate a destination or result vector. The source vector operands may be of the same size, may contain data elements of the same width, and thus may each contain the same number of data elements. The source data elements in the same bit positions in the two source vector operands may represent pairs of corresponding data elements. The vector operation may be performed separately or independently on each of these pairs of corresponding source data elements to generate a matching number of result data elements, and thus each pair of corresponding source data elements may have a corresponding result data element. Typically, the result data elements for such an instruction are in the same order and they often have the same size.

### BRIEF DESCRIPTION OF DRAWINGS

Various embodiments in accordance with the present disclosure will be described with reference to the drawings, in which:
**FIG. 1** illustrates an exemplary execution of a near multiply and accumulate instruction (NEARMULACC).
**FIG. 2** illustrates embodiments of hardware to process an instruction, such as a near multiply and accumulate instruction (NEARMULACC).
**FIG. 3** illustrates an embodiment of a method performed by a processor to process a near multiply and accumulate instruction.
**FIG. 4** illustrates an embodiment of a method performed by a processor to process a near multiply and accumulate instruction using emulation or binary translation.
**FIG. 5** illustrates an embodiment of a method performed by a processor to process/perform operations in relation to a near multiply and accumulate instruction.
**FIG. 6** illustrates embodiments of an exemplary system.
**FIG. 7** illustrates a block diagram of embodiments of a processor that may have more than one core, may have an integrated memory controller, and may have integrated graphics.
**FIG. 8(A)** is a block diagram illustrating both an exemplary in-order pipeline and an exemplary register renaming, out-of-order issue/execution pipeline according to some embodiments.
**FIG. 8(B)** is a block diagram illustrating both an exemplary embodiment of an in-order architecture core and an exemplary register renaming, out-of-order issue/execution architecture core to be included in a processor according to some embodiments.
**FIG. 9** illustrates embodiments of execution unit(s) circuitry.
**FIG. 10** is a block diagram of a register architecture according to some embodiments.
**FIG. 11** illustrates embodiments of an instruction format.
**FIG. 12** illustrates embodiments of an addressing field.
**FIG. 13** illustrates embodiments of a first prefix.
**FIGS. 14(A)****-(D)** illustrate embodiments of the R, X, and B fields of a first prefix can be used.
**FIGS. 15(A)****-(B)** illustrate embodiments of a second prefix.
**FIG. 16** illustrates embodiments of a third prefix.
**FIG. 17** illustrates a block diagram contrasting the use of a software instruction converter to convert binary instructions in a source instruction set to binary instructions in a target instruction set according to some embodiments.

### DETAILED DESCRIPTION

The present disclosure relates to methods, apparatus, systems, and non-transitory computer-readable storage media for performing near multiply and add/accumulate instructions that efficiently computes a result when a value of an operand is equal to or near a power of two.

A multiply and add/accumulate instruction (sometimes referred to as a MAC instruction) may have three operands. A first pair of operands store multiplicands that will be multiplied together to form a product and the third operand stores a value that will be added to the product. This sum is stored in a destination operand as the result of the multiply and accumulate instruction. Although described with a single set of three values, the multiply and accumulate instruction can operate in a similar fashion with multiple sets of data elements in source operands. In the configuration described above, the multiplicands can be passed to execution unit circuitry that is configured to multiply the multiplicands. The product is thereafter passed to execution unit circuitry that is configured to add the product to a value/data element stored in the third operand. Although this technique produces an accurate result, it requires considerable time and energy/power to complete as multiplication operations can be resource intensive. However, the level of precision offered through this technique is not always needed. Accordingly, strictly performing multiplication in response to a multiply and accumulate instruction may consume valuable resources and provide helpful but unnecessary precision.

A near multiply and accumulate instruction is presented that has three operands, including (1) a first source operand (that may also function as a destination operand), (2) a second source operand, and (3) a third source operand. In this configuration, values/multiplicands from the first and second source operands will be effectively multiplied together, and their product will be summed with a value in the third source operand. In particular, in response to determining that one multiplicand (a power of two multiplicand) is equal to or near a power of two (e.g., equal to or within a prescribed distance from any value of 2^{X}, where X is an integer value), a shift operation will be performed in relation to the other multiplicand (a shift multiplicand) to produce a product. In particular, the shift multiplicand will be shifted a number of bit positions equal to the root-two power of the power of two multiplicand (i.e., X in the example above). Alternatively, when neither multiplicand is equal to or near a power of two, the multiplicands are multiplied together to produce a product. In either case, the product is added to the value from the third source operand and the sum is stored in the destination operand (e.g., the first source operand). Although described in relation to single values/data elements in each source operand, the near multiply and accumulate instruction can be performed in relation to packed operands with corresponding sets of values/data elements from each of the source operands with the resultant values/data elements being stored as packed data in the destination operand. Based on the technique described above, which will be described in greater detail below, the near multiply and accumulate instruction effectively multiplies multiplicands either via a multiply operation or via a shift operation. When a shift operation can be employed, overhead involved in a multiplication can be avoided while still producing a relatively accurate product of the multiplicands.

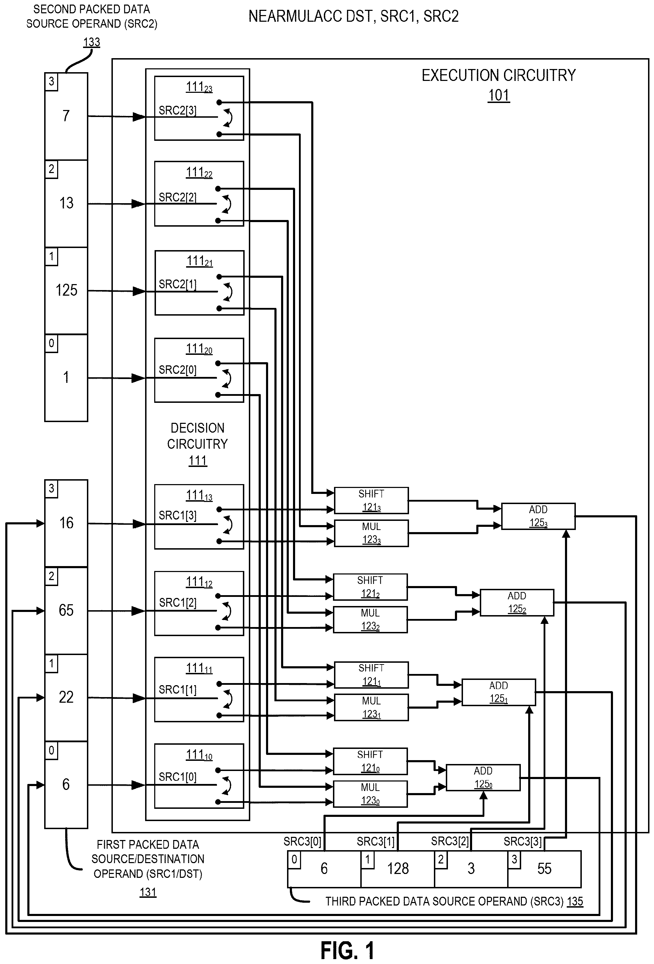

**FIG. 1** illustrates exemplary execution of a near multiply and accumulate instruction (NEARMULACC). While this illustration is in little endian format, the principles discussed herein work in big endian format. The near multiply and accumulate instruction includes fields for a common first source and destination (first packed data source (SRC1) 131 also referred to as packed data destination (DST) 131) and two additional sources (second packed data source (SRC2) 133 and third packed data source (SRC3) 135).

First packed data source 131 (sometimes referred to as first source operand 131) includes four packed data elements (shown at packed data element positions 0-3). Depending upon the implementation, first packed data source 131 is a packed data register (e.g., a XMM, YMM, ZMM, vector, SIMD, etc. register), or a memory location. Further, although shown with four data elements, in some embodiments, the first packed data source 131 can include more or fewer data elements (e.g., eight or sixteen data elements packed into the first packed data source 131). As noted above, this same location may also be used as a destination for the near multiply and accumulate instruction.

Second packed data source 133 (sometimes referred to as second source operand 133) includes four packed data elements (shown at packed data element positions 0-3). Depending upon the implementation, second packed data source 133 is a packed data register (e.g., a XMM, YMM, ZMM, vector, SIMD, etc. register), or a memory location. Further, although shown with four data elements, in some embodiments, the second packed data source 133 can include more or fewer data elements (e.g., eight or sixteen data elements packed into the second packed data source 133).

Third packed data source 135 (sometimes referred to as third source operand 135) includes four packed data elements (shown at packed data element positions 0-3). Depending upon the implementation, third packed data source 135 is a packed data register (e.g., a XMM, YMM, ZMM, vector, SIMD, etc. register), or a memory location. Further, although shown with four data elements, in some embodiments, the third packed data source 135 can include more or fewer data elements (e.g., eight or sixteen data elements packed into the third packed data source 135).

The three packed data sources 131, 133, and 135 are fed/passed into execution circuitry 101 to be operated on. In particular, execution circuitry 101 performs near multiply and accumulate operations using the source data (e.g., the first, second, and third source packed data sources 131, 133, and 135) and stores the result in the destination (i.e., the packed data destination 131). As shown, pairs of data elements are passed from the packed data sources 131 and 133 to the execution circuitry 101. In particular, pairs of data elements are taken from identical positions in the first and second packed data sources 131 and 133 and passed to the execution circuitry 101. For example, the data element from the first packed data source 131 at position 0 and the data element from the second packed data source 133 at position 0 form/represent a pair of data elements, the data element from the first packed data source 131 at position 1 and the data element from the second packed data source 133 at position 1 form/represent a pair of data elements, etc. Each data element in these pairs of data elements from the first and second packed data sources 131 and 133 represent multiplicands. Specifically, as will be described in greater detail below, the execution circuitry 101 will produce a product data element for each pair of data elements either via a shift operation or a multiply operation.

In some embodiments, the execution circuitry 101 includes (1) decision circuitry 111 with decision circuitry elements 111₁₀-111₁₃ corresponding to each of the data elements 0-3 in the first packed data source 131 and (2) decision circuitry elements 111₂₀-111₂₃ corresponding to each of the data elements 0-3 in the second packed data source 133. Each of the decision circuitry elements 111₁₀-111₁₃ and 111₂₀-111₂₃ pass corresponding data elements to either shift circuitry 121₀-121₃ or to multiplication circuitry 123₀-123₃. For example, the decision circuitry elements 111₁₀-111₁₃ and 111₂₀-111₂₃ may determine if at least one data element in a pair of data elements from the first and second packed data sources 131 and 133 is equal to a power of two or near a power of two. In one embodiment, a data element is a power of two when the data element is equal to a value of 2^{X}, where X is an integer value. For example, the data element at position 3 in the first packed data source 131 has a value of 16, which is equal to a power of two (i.e., 16 = 2⁴). Similarly, the data element at position 0 in the second packed data source 133 has a value of 1, which is equal to a power of two (i.e., 1 = 2⁰). A data element is near a power of two when the difference between the data element and a value of 2^{X} is less than or equal to a threshold. In some embodiments, the threshold can be a specific value (e.g., 0.1, 1, 2, or 3) or based on the data element or nearest power of two (e.g., the threshold is 1%, 5%, or 10% of the value of the data element or the power of two nearest to the data element). For example, when the threshold has a value of 1, (1) the data element at position 2 of the first packed data source 131 is near a power of two since this data element has a value of 65, which is within the threshold from the value of 64, which is a power of two (e.g. 64 = 2⁶) and (2) the data element at position 3 of the second packed data source 133 is near a power of two since this data element has a value of 7, which is within the threshold from the value of 8, which is a power of two (e.g. 8 = 2³). As used herein, a data element that is determined to be a power of two or near a power of two is referred to as the power of two data element while the other data element in the pair of data elements is referred to as the shift data element.

When at least one data element in a respective pair of data elements of the first packed data source 131 and second packed data source 133 is a power of two or near a power of two, the pair of data elements are passed to respective shift circuitry 121₀-121₃ (e.g., the shift circuitry 121₀ corresponds to the data elements from position 0 from the first and second packed data source 131 and 133, the shift circuitry 121₁ corresponds to the data elements at position 1 from the first and second packed data source 131 and 133, etc.). Conversely, when neither data element in a respective pair of data elements of the first packed data source 131 and second packed data source 133 is a power of two or near a power of two, the pair of data elements are passed to respective multiplication circuitry 123₀-123₃ (e.g., the multiplication circuitry 123o corresponds to the data elements at position 0 from the first and second packed data source 131 and 133, the multiplication circuitry 123₁ corresponds to the data elements at position 1 from the first and second packed data source 131 and 133, etc.). Pairs of decision circuitry elements 111 can work in conjunction to determine whether at least one data element from a pair of data elements is a power of two or near a power of two. For example, although the decision circuitry element 111₁₀ may determine that a data element from the first packed data source 131 (i.e., a first element of a pair of data elements) is not a power of two or near a power of two, since the corresponding decision circuitry element 111₂₀ determines that a data element from the second packed data source 133 (i.e., a second element of the pair of data elements) is a power of two or near a power of two, both the decision circuitry elements 111₁₀ and 111₂₀ may pass respective data elements to the shift circuitry 121₀ for processing together. Although shown and described as separate decision circuitry elements 111 for each data element in a pair of data elements, in some embodiments, each pair of data elements can share a single decision circuitry element 111. Accordingly, a pair of data elements are passed to a single decision circuitry element 111 and the decision circuitry element 111 routes/passed the pair of data elements to either shift circuitry 121 or multiplication circuitry 123.

Based on the example data elements in **FIG. 1** and a threshold of 1, (1) the pair of data elements in position 0 of the first packed data source 131 and the second packed data source 133, respectively, would be selected/determined by decision circuitry elements 111₁₀ and 111₂₀ to be passed to shift circuitry 121o as the value of the data element in position 0 of the second packed data source 133 is equal to a power of two (i.e., 1 = 2⁰), (2) the pair of data elements in position 1 of the first packed data source 131 and the second packed data source 133, respectively, would be selected/determined by decision circuitry elements 111₁₁ and 111₂₁ to be passed to multiplication circuitry 123₁ as the values of the data elements in position 1 of the first packed data source 131 and the second packed data source 133 are not equal to a power of two or near (i.e., within the threshold separation) a power of two, (3) the pair of data elements in position 2 of the first packed data source 131 and the second packed data source 133, respectively, would be selected/determined by decision circuitry elements 111₁₂ and 111₂₂ to be passed to shift circuitry 1212 as the value of the data element in position 2 of the first packed data source 131 is near a power of two (i.e., 65 = 2⁶ + 1), and (4) the pair of data elements in position 3 of the first packed data source 131 and the second packed data source 133, respectively, would be selected/determined by decision circuitry elements 111₁₃ and 111₂₃ to be passed to shift circuitry 1213 as the value of the data element in position 3 of the first packed data source 131 is equal to a power of two (i.e., 16 = 2⁴) and/or the value of the data element in position 3 of the second packed data source 133 is near a power of two (i.e., 7 = 2³ - 1).

In response to receiving a pair of data elements, shift circuitry 121 shifts the shift data element based on the power of two data element. For example, as noted above, the power of two data element is either equal to a value of 2^{X} or near a value of 2^{X} (i.e., within a threshold of a value of 2^{X}). In some embodiments, shift circuitry 121 shifts the shift data element to the left a number of bit positions equal to X. This results in a set of bits (equal in number to X) with the value of zero to be appended/added to the least significant bit positions of the data element to produce a shifted/product data element. In particular, this shifted data element represents a product of the pair of data elements. Although described as shifting bits of the shift data element to the left, in some embodiments this can be viewed as shifting the radix point (e.g., binary point) of the shift data element to the right. The radix point is used in numerical representations to separate the integer part of a number (to the left of the radix point) from its fractional part (to the right of the radix point). Shifting the radix point to the right results in multiplication of the data element by a power of two while shifting the radix point to the left results in division of the data element by a power of two. In particular, shifting a radix point for a data element to the right by X bits results in the data element to be multiplied by 2^{X} whereas shifting a radix point for a data element to the left by X bits results in the data element to be divided by 2^{X} (in each case X is an integer value).

Although described as the power of two data element being passed to shift circuitry 121, in some embodiments the entire power of two data element is not passed to the shift circuitry 121. In particular, as discussed above, a decision circuitry element 111 can determine that a data element is a power of two (i.e., the data element is equal to a value of 2^{X} for some integer value of X) or near a power of two (i.e., the data element is within a threshold of a value 2^{X} for some integer value of X). In these embodiments, the decision circuitry element 111 can pass the integer value X to the shift circuitry 121 instead of the entire power of two data element.

In response to receiving a pair of data elements, multiplication circuitry 123 multiplies the two data elements to produce a product data element. Accordingly, either shift circuitry 121 or multiplication circuitry 123 produce a product data element for a pair of data elements. When the shift circuitry 121 can be used, this can produce an efficiency improvement, including reduced time and energy/power to produce a product data element.

The product data element (either from shift circuitry 121 or from multiplication circuitry 123) is passed to corresponding addition circuitry 125₀-125₃ along with a data element from the third packed data source 135. For example, if a product data element that is passed to addition circuitry 125o represents the product of a data element from position 0 of the first packed data source 131 and a data element from position 0 of the second packed data source 133, a data element from the same position in the third packed data source 135 (i.e., the data element from position 0 of the third packed data source 135) is passed to the addition circuitry 125₀. The addition circuitry 125o adds the product data element with the received data element from the third packed data source 135 to produce a sum/result data element.

Packed data destination 131 stores the results from the addition circuitry 125₀-125₃. The packed data element position to be used in packed data destination 131 correlates with the packed data element position of first, second, and third packed data sources 131, 133, and 135. In this illustration, the destination operand is the same as the first packed data source operand (i.e., the first packed data source/destination 131), however, that does not need to be the case.

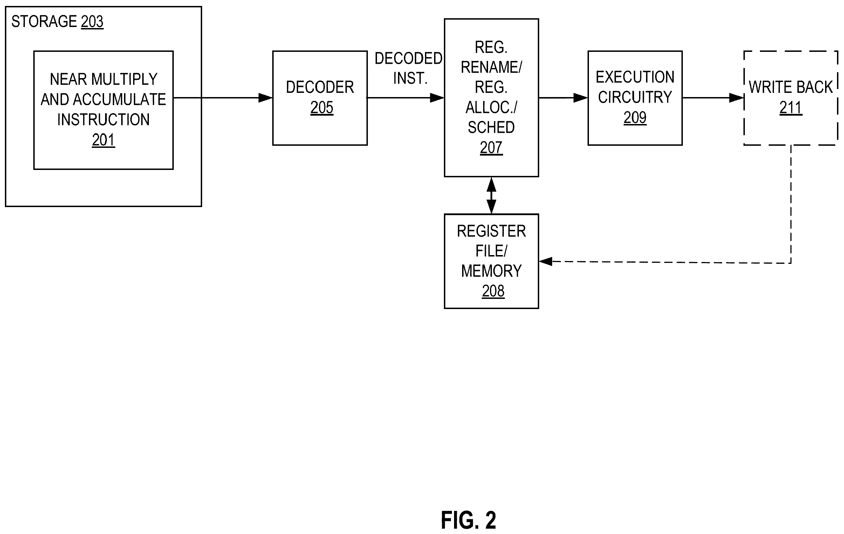

**FIG. 2** illustrates embodiments of hardware to process an instruction such as a near multiply and accumulate instruction (NEARMULACC). As illustrated, storage 203 stores a near multiply and accumulate instruction 201 to be executed.

The instruction 201 is received by decode circuitry 205. For example, the decode circuitry 205 receives this instruction from fetch logic/circuitry. The instruction includes fields for an opcode, first, second, and third sources, and a destination. In some embodiments, the sources and destination are registers, and in other embodiments one or more are memory locations.

More detailed embodiments of at least one instruction format will be detailed later. The decode circuitry 205 decodes the instruction into one or more operations. In some embodiments, this decoding includes generating a plurality of micro-operations to be performed by execution circuitry (such as execution circuitry 209). The decode circuitry 205 also decodes instruction prefixes.

In some embodiments, register renaming, register allocation, and/or scheduling circuitry 207 provides functionality for one or more of: 1) renaming logical operand values to physical operand values (e.g., a register alias table in some embodiments), 2) allocating status bits and flags to the decoded instruction, and 3) scheduling the decoded instruction for execution on execution circuitry out of an instruction pool (e.g., using a reservation station in some embodiments).

Registers (register file) and/or memory 208 store data as operands of the instruction to be operated on by execution circuitry 209. Exemplary register types include packed data registers, general purpose registers, and floating-point registers.

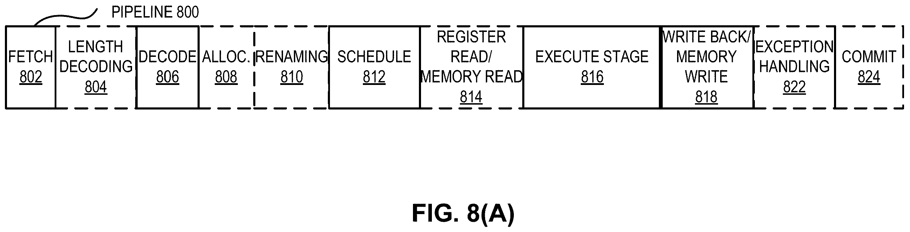

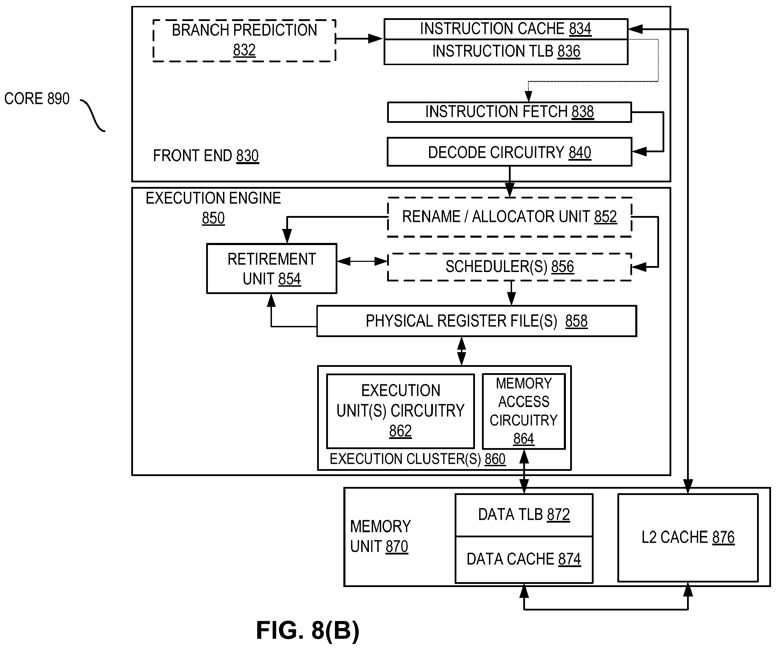

Execution circuitry 209 executes the decoded instruction. Exemplary detailed execution circuitry is shown in FIGS. 1, 8, etc. The execution of the decoded instruction causes the execution circuitry to (1) effectively perform a multiplication of a pair of data elements from the first and second packed data sources to produce a product data element via a shift operation when at least one data elements in a pair of data elements is equal to a power of two or near a power of two or via multiplication of the pair of data elements when the pair of data elements is neither equal to a power of two or near a power of two and (2) add the product data element to a corresponding data element from the third packed data source.

In some embodiments, retirement/write back circuitry 211 architecturally commits the destination register into the registers or memory 208 and retires the instruction.

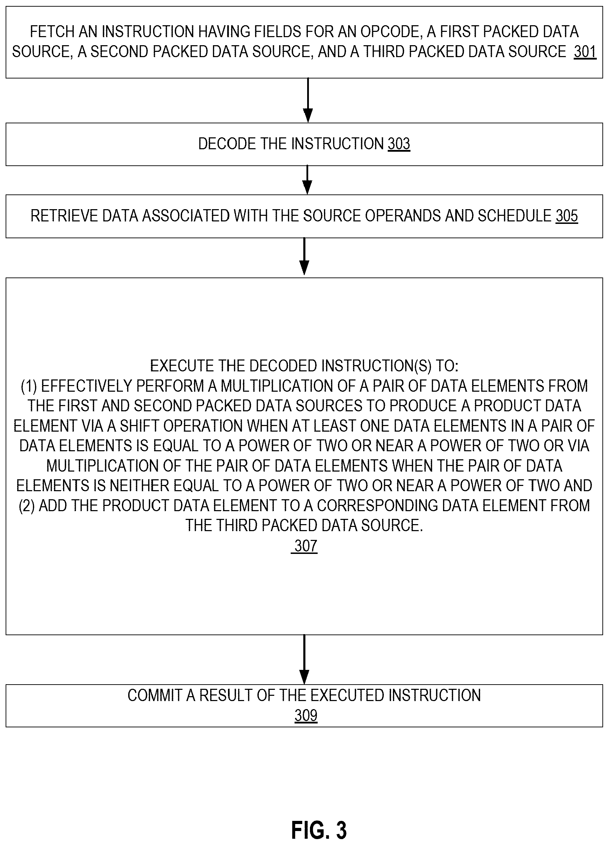

FIG. 3 illustrates an embodiment of method performed by a processor to process a near multiply and accumulate instruction. For example, a processor core as shown in **FIG. 8(B)****,** a pipeline as detailed below, etc. performs this method.

At 301, an instruction is fetched. For example, a near multiply and accumulate instruction is fetched. The near multiply and accumulate instruction includes fields for an opcode, a first packed data source (that can also function as a packed data destination), a second packed data source, and a third packed data source. In some embodiments, the instruction further includes a field for a writemask. In some embodiments, the instruction is fetched from an instruction cache. As noted above, the source operands and destination operand are packed data.

The fetched instruction is decoded at 303. For example, the fetched near multiply and accumulate instruction is decoded by decode circuitry such as that detailed herein.

Data values associated with the source operands of the decoded instruction are retrieved at 305. For example, when one or more of the source operands are memory operands, the data from the indicated memory location is retrieved.

At 307, the decoded instruction is executed by execution circuitry (hardware) such as that detailed herein. For the near multiply and accumulate instruction, the execution will cause execution circuitry to (1) effectively perform a multiplication of a pair of data elements from the first and second packed data sources to produce a product data element via a shift operation when at least one data elements in a pair of data elements is equal to a power of two or near a power of two or via multiplication of the pair of data elements when the pair of data elements is neither equal to a power of two or near a power of two and (2) add the product data element to a corresponding data element from the third packed data source.

In some embodiments, the instruction is committed or retired at 309.

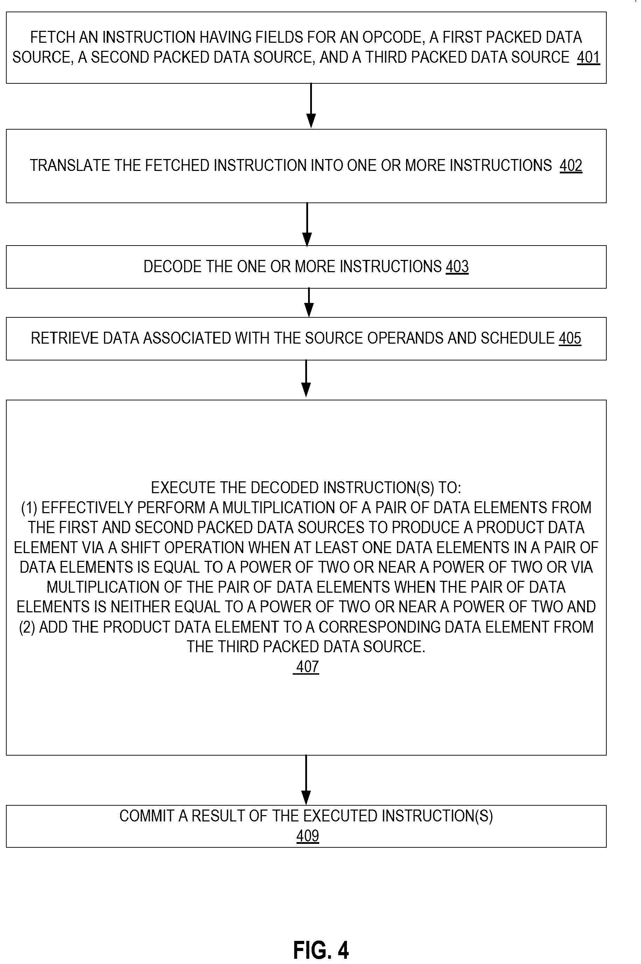

**FIG. 4** illustrates an embodiment of method performed by a processor to process a near multiply and accumulate instruction using emulation or binary translation. For example, a processor core as shown in **FIG. 8(B)****,** a pipeline as detailed below, etc. performs this method.

At 401, an instruction is fetched. For example, a near multiply and accumulate instruction is fetched. The near multiply and accumulate instruction includes fields for an opcode, a first packed data source (that can also function as a packed data destination), a second packed data source, and a third packed data source. In some embodiments, the instruction further includes a field for a writemask. In some embodiments, the instruction is fetched from an instruction cache. As noted above, the source operands and destination operand are packed data.

The fetched instruction of the first instruction set is translated into one or more instructions of a second instruction set at 402.

The one or more translated instructions of the second instruction set are decoded at 403. In some embodiments, the translation and decoding are merged.

Data values associated with the source operands of the decoded instruction are retrieved at 405. For example, when one or more of the source operands are memory operands, the data from the indicated memory location is retrieved.

At 407, the decoded instruction(s) of the second instruction set is/are executed by execution circuitry (hardware) such as that detailed herein. For the near multiply and accumulate instruction, the execution will cause execution circuitry to (1) effectively perform a multiplication of a pair of data elements from the first and second packed data sources to produce a product data element via a shift operation when at least one data elements in the pair of data elements is equal to a power of two or near a power of two or via multiplication of the pair of data elements when the pair of data elements is neither equal to a power of two or near a power of two and (2) add the product data element to a corresponding data element from the third packed data source.

In some embodiments, the instruction is committed or retired at 409.

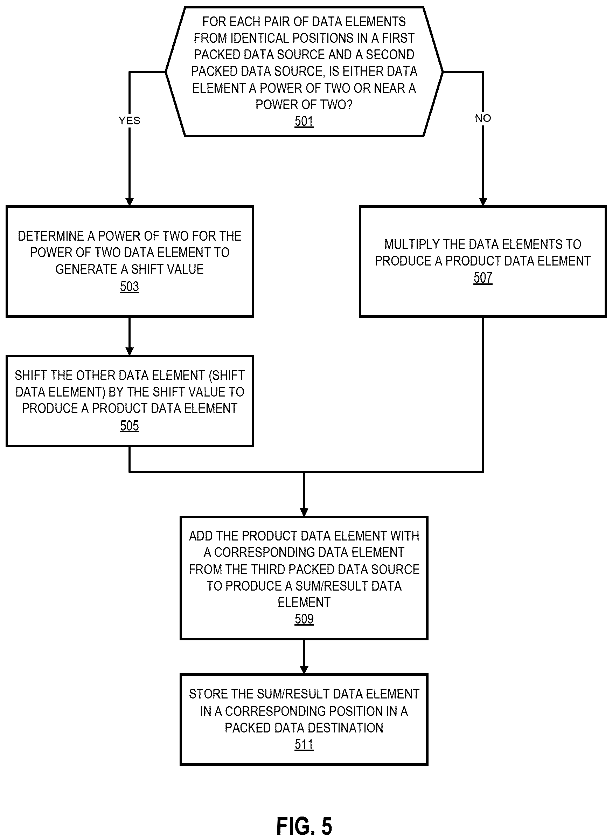

**FIG. 5** illustrates an embodiment of method performed by a processor to process/perform either operation 307 or operation 407 in relation to the near multiply and add/accumulate instruction. For example, a processor core as shown in **FIG. 8(B)****,** a pipeline as detailed below, etc. performs this method.

The method will be described in relation to a pair of data elements from the first packed data source 131 and second packed data source 133. In particular, a first data element from the pair is retrieved/taken from a position in the first packed data source 131, a second data element from the pair is retrieved/taken from the same position in the second packed data source 133, and these two data elements form a pair of data elements are operated on by this method. The method also uses a third data element retrieved from the same position in the third packed data source 135 as the pair of data elements. Although described in relation to individual sets of data elements from packed data sources, the method can be performed for each set of data elements in corresponding positions from the first, second, and third packed data sources 131, 133, and 135. Accordingly, the method of **FIG. 5** can be iteratively or concurrently performed for each set of data elements in corresponding positions from the first, second, and third packed data sources 131, 133, and 135.

As shown in **FIG. 5****,** the method may commence at operation 501 with a determination of whether either data element from the pair of data elements is equal to a power of two or near a power of two. In one embodiment, a data element is a power of two when the data element is equal to a value of 2^{X}, where X is an integer value. A data element is near a power of two when the difference/separation between the data element and a value of 2^{X} is less than or equal to a threshold. In some embodiments, the threshold can be a specific value (e.g., 0.1, 1, 2, 3) or based on the data element and/or nearest power of two (e.g., the threshold is 1%, 5%, or 10% of the value of the data element or the power of two nearest to the data element). As used herein, a data element that is determined to be a power of two or near a power of two is referred to as the power of two data element while the other data element in the pair of data elements is referred to as the shift data element.

In response to determining that at least one data element in the pair of data elements is equal to a power of two or is near a power of two (e.g., the power of two data element), the method moves to operation 503. At operation 503, a power of two is determined for the power of two data element. In particular, as noted above, a data element is a power of two when the data element is equal to a value of 2^{X} and a data element is near a power of two when the difference/separation between the data element and a value of 2^{X} is less than or equal to a threshold. Accordingly, at operation 503 the power X is determined in relation to the power of two data element and will be used as a shift value (i.e., a number of bits to shift the shift data element). In some embodiments, both data elements in the pair of data elements may be equal to a power of two or near a power of two. In these cases, the data element from the pair of data elements that is equal to a power is selected as the power of two data element over a data element that is near a power of two. When both data elements are equal to powers of two, the smaller data element (i.e., the data element with the lowest value) is selected as the power of two data element. When neither data elements in the pair of data elements is equal to a power of two but both data elements are near a power of two, either (1) the data element closer to a power of two is selected as the power of two data element or (2) the smaller data element (i.e., the data element with the lowest value) is selected as the power of two data element.

At operation 505, the shift data element is shifted based on the shift value to generate a product data element. In some embodiments, shifting the data element based on the shift value includes shifting the shift data element to the left a number of bit positions equal to the shift value. This results in a set of bits (equal in number to the shift value) with the value of zero to be appended/added to the least significant bit positions of the shift data element to produce a shifted/product data element. In particular, this shifted data element represents a product of the pair of data elements. Although described as shifting bits of the shift data element to the left, in some embodiments this can be viewed as shifting the radix point (e.g., binary point) of the shift data element to the right. The radix point is used in numerical representations to separate the integer part of a number (to the left of the radix point) from its fractional part (to the right of the radix point). Shifting the radix point to the right results in multiplication of the data element by a power of two while shifting the radix point to the left results in division of the data element by a power of two. In particular, shifting a radix point for a data element to the right by X bits results in the data element to be multiplied by 2^{X} whereas shifting a radix point for a data element to the left by X bits results in the data element to be divided by 2^{X} (in each case X is an integer value). Accordingly, shifting a data element effectively multiplies or divides the data element by a power of two.

Returning to operation 501, in response to determining that neither data element in the pair of data elements is equal to a power of two or is near a power of two, the method moves to operation 507. At operation 507 the pair of data elements are multiplied together to produce a product data element. Accordingly, as described above, using either a shift operation, when a data element is equal to or near a power of two, or a multiplication operation, when neither data element is equal to or near a power of two, the operations 501-507 produce a product data element.

Following either operation 505 or operation 507, the method moves to operation 509. At operation 509, the product data element (either from operation 505 or from operation 507) is added to a data element from a corresponding position in the third packed data source 135 to produce a sum/result data element. For example, if a product data element represents the product of a data element from position 0 of the first packed data source 131 and a data element from position 0 of the second packed data source 133, a data element from the same position in the third packed data source 135 (i.e., the data element from position 0 of the third packed data source 135) is added to this product data element to produce a sum/result data element.

At operation 511, the sum/result data element is stored in a corresponding position in the packed data destination 131. The packed data element position to be used in packed data destination 131 correlates with the packed data element position of first, second, and third packed data sources 131, 133, 135.

### Exemplary Computer Architectures

Detailed below are describes of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

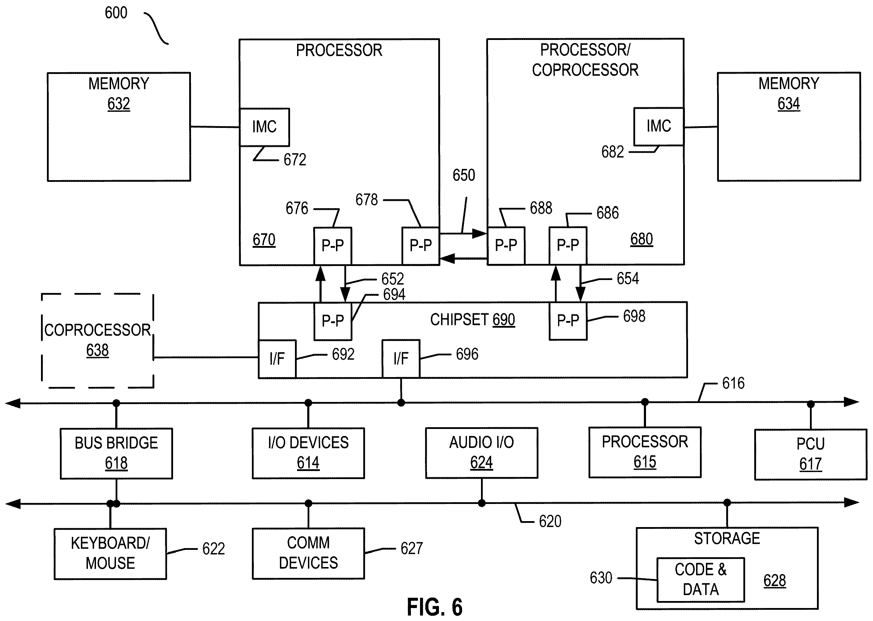

**FIG. 6** illustrates embodiments of an exemplary system. Multiprocessor system 600 is a point-to-point interconnect system and includes a plurality of processors including a first processor 670 and a second processor 680 coupled via a point-to-point interconnect 650. In some embodiments, the first processor 670 and the second processor 680 are homogeneous. In some embodiments, first processor 670 and the second processor 680 are heterogenous.

Processors 670 and 680 are shown including integrated memory controller (IMC) units circuitry 672 and 682, respectively. Processor 670 also includes as part of its interconnect controller units' point-to-point (P-P) interfaces 676 and 678; similarly, second processor 680 includes P-P interfaces 686 and 688. Processors 670, 680 may exchange information via the point-to-point (P-P) interface 650 using P-P interface circuits 678, 688. IMCs 672 and 682 couple the processors 670, 680 to respective memories, namely a memory 632 and a memory 634, which may be portions of main memory locally attached to the respective processors.

Processors 670, 680 may each exchange information with a chipset 690 via individual P-P interfaces 652, 654 using point to point interface circuits 676, 694, 686, 698. Chipset 690 may optionally exchange information with a coprocessor 638 via a high-performance interface 692. In some embodiments, the coprocessor 638 is a special-purpose processor, such as, for example, a high-throughput MIC processor, a network or communication processor, compression engine, graphics processor, GPGPU, embedded processor, or the like.

A shared cache (not shown) may be included in either processor 670, 680 or outside of both processors, yet connected with the processors via P-P interconnect, such that either or both processors' local cache information may be stored in the shared cache if a processor is placed into a low power mode.

Chipset 690 may be coupled to a first interconnect 616 via an interface 696. In some embodiments, first interconnect 616 may be a Peripheral Component Interconnect (PCI) interconnect, or an interconnect such as a PCI Express interconnect or another I/O interconnect. In some embodiments, one of the interconnects couples to a power control unit (PCU) 617, which may include circuitry, software, and/or firmware to perform power management operations with regard to the processors 670, 680 and/or co-processor 638. PCU 617 provides control information to a voltage regulator to cause the voltage regulator to generate the appropriate regulated voltage. PCU 617 also provides control information to control the operating voltage generated. In various embodiments, PCU 617 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 617 is illustrated as being present as logic separate from the processor 670 and/or processor 680. In other cases, PCU 617 may execute on a given one or more of cores (not shown) of processor 670 or 680. In some cases, PCU 617 may be implemented as a microcontroller

(dedicated or general-purpose) or other control logic configured to execute its own dedicated power management code, sometimes referred to as P-code. In yet other embodiments, power management operations to be performed by PCU 617 may be implemented externally to a processor, such as by way of a separate power management integrated circuit (PMIC) or another component external to the processor. In yet other embodiments, power management operations to be performed by PCU 617 may be implemented within BIOS or other system software.

Various I/O devices 614 may be coupled to first interconnect 616, along with an interconnect (bus) bridge 618 which couples first interconnect 616 to a second interconnect 620. In some embodiments, one or more additional processor(s) 615, such as coprocessors, high-throughput MIC processors, GPGPU's, accelerators (such as, e.g., graphics accelerators or digital signal processing (DSP) units), field programmable gate arrays (FPGAs), or any other processor, are coupled to first interconnect 616. In some embodiments, second interconnect 620 may be a low pin count (LPC) interconnect. Various devices may be coupled to second interconnect 620 including, for example, a keyboard and/or mouse 622, communication devices 627 and a storage unit circuitry 628. Storage unit circuitry 628 may be a disk drive or other mass storage device which may include instructions/code and data 630, in some embodiments. Further, an audio I/O 624 may be coupled to second interconnect 620. Note that other architectures than the point-to-point architecture described above are possible. For example, instead of the point-to-point architecture, a system such as multiprocessor system 600 may implement a multi-drop interconnect or other such architecture.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

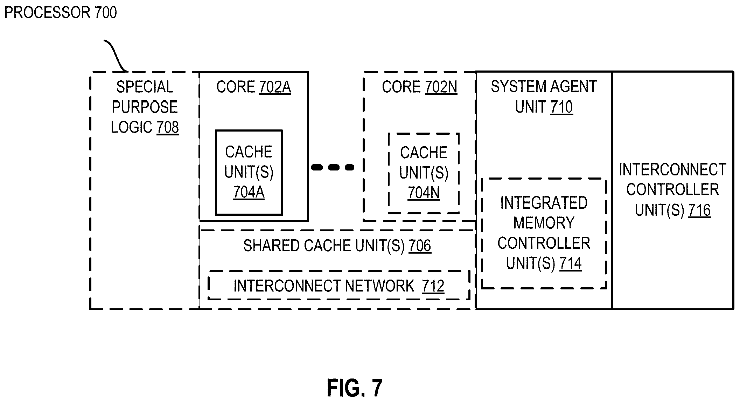

**FIG. 7** illustrates a block diagram of embodiments of a processor 700 that may have more than one core, may have an integrated memory controller, and may have integrated graphics. The solid lined boxes illustrate a processor 700 with a single core 702A, a system agent 710, a set of one or more interconnect controller units circuitry 716, while the optional addition of the dashed lined boxes illustrates an alternative processor 700 with multiple cores 702(A)-(N), a set of one or more integrated memory controller unit(s) circuitry 714 in the system agent unit circuitry 710, and special purpose logic 708, as well as a set of one or more interconnect controller units circuitry 716. Note that the processor 700 may be one of the processors 670 or 680, or co-processor 638 or 615 of **FIG. 6****.**

Thus, different implementations of the processor 700 may include: 1) a CPU with the special purpose logic 708 being integrated graphics and/or scientific (throughput) logic (which may include one or more cores, not shown), and the cores 702(A)-(N) being one or more general purpose cores (e.g., general purpose in-order cores, general purpose out-of-order cores, or a combination of the two); 2) a coprocessor with the cores 702(A)-(N) being a large number of special purpose cores intended primarily for graphics and/or scientific (throughput); and 3) a coprocessor with the cores 702(A)-(N) being a large number of general purpose in-order cores. Thus, the processor 700 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 700 may be a part of and/or may be implemented on one or more substrates using any of a number of process technologies, such as, for example, BiCMOS, CMOS, or NMOS.

A memory hierarchy includes one or more levels of cache unit(s) circuitry 704(A)-(N) within the cores 702(A)-(N), a set of one or more shared cache units circuitry 706, and external memory (not shown) coupled to the set of integrated memory controller units circuitry 714. The set of one or more shared cache units circuitry 706 may include one or more mid-level caches, such as level 2 (L2), level 3 (L3), level 4 (L4), or other levels of cache, such as a last level cache (LLC), and/or combinations thereof. While in some embodiments ring based interconnect network circuitry 712 interconnects the special purpose logic 708 (e.g., integrated graphics logic), the set of shared cache units circuitry 706, and the system agent unit circuitry 710, alternative embodiments use any number of well-known techniques for interconnecting such units. In some embodiments, coherency is maintained between one or more of the shared cache units circuitry 706 and cores 702(A)-(N).

In some embodiments, one or more of the cores 702(A)-(N) are capable of multi-threading. The system agent unit circuitry 710 includes those components coordinating and operating cores 702(A)-(N). The system agent unit circuitry 710 may include for example power control unit (PCU) circuitry and/or display unit circuitry (not shown). The PCU may be or may include logic and components needed for regulating the power state of the cores 702(A)-(N) and/or the special purpose logic 708 (e.g., integrated graphics logic). The display unit circuitry is for driving one or more externally connected displays.

The cores 702(A)-(N) may be homogenous or heterogeneous in terms of architecture instruction set; that is, two or more of the cores 702(A)-(N) may be capable of executing the same instruction set, while other cores may be capable of executing only a subset of that instruction set or a different instruction set.

### Exemplary Core Architectures

### In-order and out-of-order core block diagram

**FIG. 8(A)** is a block diagram illustrating both an exemplary in-order pipeline and an exemplary register renaming, out-of-order issue/execution pipeline according to embodiments of the invention. **FIG. 8(B)** is a block diagram illustrating both an exemplary embodiment of an in-order architecture core and an exemplary register renaming, out-of-order issue/execution architecture core to be included in a processor according to embodiments of the invention. The solid lined boxes in **FIGS. 8(A)****-(B)** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **FIG. 8(A)****,** a processor pipeline 800 includes a fetch stage 802, an optional length decode stage 804, a decode stage 806, an optional allocation stage 808, an optional renaming stage 810, a scheduling (also known as a dispatch or issue) stage 812, an optional register read/memory read stage 814, an execute stage 816, a write back/memory write stage 818, an optional exception handling stage 822, and an optional commit stage 824. One or more operations can be performed in each of these processor pipeline stages. For example, during the fetch stage 802, one or more instructions are fetched from instruction memory, during the decode stage 806, the one or more fetched instructions may be decoded, addresses (e.g., load store unit (LSU) addresses) using forwarded register ports may be generated, and branch forwarding (e.g., immediate offset or an link register (LR)) may be performed. In one embodiment, the decode stage 806 and the register read/memory read stage 814 may be combined into one pipeline stage. In one embodiment, during the execute stage 816, the decoded instructions may be executed, LSU address/data pipelining to an Advanced Microcontroller Bus (AHB) interface may be performed, multiply and add operations may be performed, arithmetic operations with branch results may be performed, etc.

By way of example, the exemplary register renaming, out-of-order issue/execution core architecture may implement the pipeline 800 as follows: 1) the instruction fetch 838 performs the fetch and length decoding stages 802 and 804; 2) the decode unit circuitry 840 performs the decode stage 806; 3) the rename/allocator unit circuitry 852 performs the allocation stage 808 and renaming stage 810; 4) the scheduler unit(s) circuitry 856 performs the schedule stage 812; 5) the physical register file(s) unit(s) circuitry 858 and the memory unit circuitry 870 perform the register read/memory read stage 814; the execution cluster 860 perform the execute stage 816; 6) the memory unit circuitry 870 and the physical register file(s) unit(s) circuitry 858 perform the write back/memory write stage 818; 7) various units (unit circuitry) may be involved in the exception handling stage 822; and 8) the retirement unit circuitry 854 and the physical register file(s) unit(s) circuitry 858 perform the commit stage 824.

**FIG. 8(B)** shows processor core 890 including front-end unit circuitry 830 coupled to an execution engine unit circuitry 850, and both are coupled to a memory unit circuitry 870. The core 890 may be a reduced instruction set computing (RISC) core, a complex instruction set computing (CISC) core, a very long instruction word (VLIW) core, or a hybrid or alternative core type. As yet another option, the core 890 may be a special-purpose core, such as, for example, a network or communication core, compression engine, coprocessor core, general purpose computing graphics processing unit (GPGPU) core, graphics core, or the like.

The front end unit circuitry 830 may include branch prediction unit circuitry 832 coupled to an instruction cache unit circuitry 834, which is coupled to an instruction translation lookaside buffer (TLB) 836, which is coupled to instruction fetch unit circuitry 838, which is coupled to decode unit circuitry 840. In one embodiment, the instruction cache unit circuitry 834 is included in the memory unit circuitry 870 rather than the front-end unit circuitry 830. The decode unit circuitry 840 (or decoder) may decode instructions, and generate as an output one or more micro-operations, micro-code entry points, microinstructions, other instructions, or other control signals, which are decoded from, or which otherwise reflect, or are derived from, the original instructions. The decode unit circuitry 840 may further include an address generation unit circuitry (AGU, not shown). In one embodiment, the AGU generates an LSU address using forwarded register ports, and may further perform branch forwarding (e.g., immediate offset branch forwarding, LR register branch forwarding, etc.). The decode unit circuitry 840 may be implemented using various different mechanisms. Examples of suitable mechanisms include, but are not limited to, look-up tables, hardware implementations, programmable logic arrays (PLAs), microcode read only memories (ROMs), etc. In one embodiment, the core 890 includes a microcode ROM (not shown) or other medium that stores microcode for certain macroinstructions (e.g., in decode unit circuitry 840 or otherwise within the front-end unit circuitry 830). In one embodiment, the decode unit circuitry 840 includes a micro-operation (micro-op) or operation cache (not shown) to hold/cache decoded operations, micro-tags, or micro-operations generated during the decode or other stages of the processor pipeline 800. The decode unit circuitry 840 may be coupled to rename/allocator unit circuitry 852 in the execution engine unit circuitry 850.

The execution engine circuitry 850 includes the rename/allocator unit circuitry 852 coupled to a retirement unit circuitry 854 and a set of one or more scheduler(s) circuitry 856. The scheduler(s) circuitry 856 represents any number of different schedulers, including reservations stations, central instruction window, etc. In some embodiments, the scheduler(s) circuitry 856 can include arithmetic logic unit (ALU) scheduler/scheduling circuitry, ALU queues, arithmetic generation unit (AGU) scheduler/scheduling circuitry, AGU queues, etc. The scheduler(s) circuitry 856 is coupled to the physical register file(s) circuitry 858. Each of the physical register file(s) circuitry 858 represents one or more physical register files, different ones of which store one or more different data types, such as scalar integer, scalar floating point, packed integer, packed floating point, vector integer, vector floating point,, status (e.g., an instruction pointer that is the address of the next instruction to be executed), etc. In one embodiment, the physical register file(s) unit circuitry 858 includes vector registers unit circuitry, writemask registers unit circuitry, and scalar register unit circuitry. These register units may provide architectural vector registers, vector mask registers, general-purpose registers, etc. The physical register file(s) unit(s) circuitry 858 is overlapped by the retirement unit circuitry 854 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 854 and the physical register file(s) circuitry 858 are coupled to the execution cluster(s) 860. The execution cluster(s) 860 includes a set of one or more execution units circuitry 862 and a set of one or more memory access circuitry 864. The execution units circuitry 862 may perform various arithmetic, logic, floating point or other types of operations (e.g., shifts, addition, subtraction, multiplication) and on various types of data (e.g., scalar floating point, packed integer, packed floating point, vector integer, vector floating point). While some embodiments may include a number of execution units or execution unit circuitry dedicated to specific functions or sets of functions, other embodiments may include only one execution unit circuitry or multiple execution units/execution unit circuitry that all perform all functions. The scheduler(s) circuitry 856, physical register file(s) unit(s) circuitry 858, and execution cluster(s) 860 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler circuitry, physical register file(s) unit circuitry, and/or execution cluster - and in the case of a separate memory access pipeline, certain embodiments are implemented in which only the execution cluster of this pipeline has the memory access unit(s) circuitry 864). It should also be understood that where separate pipelines are used, one or more of these pipelines may be out-of-order issue/execution and the rest in-order.

In some embodiments, the execution engine unit circuitry 850 may perform load store unit (LSU) address/data pipelining to an Advanced Microcontroller Bus (AHB) interface (not shown), and address phase and writeback, data phase load, store, and branches.

The set of memory access circuitry 864 is coupled to the memory unit circuitry 870, which includes data TLB unit circuitry 872 coupled to a data cache circuitry 874 coupled to a level 2 (L2) cache circuitry 876. In one exemplary embodiment, the memory access units circuitry 864 may include a load unit circuitry, a store address unit circuit, and a store data unit circuitry, each of which is coupled to the data TLB circuitry 872 in the memory unit circuitry 870. The instruction cache circuitry 834 is further coupled to a level 2 (L2) cache unit circuitry 876 in the memory unit circuitry 870. In one embodiment, the instruction cache 834 and the data cache 874 are combined into a single instruction and data cache (not shown) in L2 cache unit circuitry 876, a level 3 (L3) cache unit circuitry (not shown), and/or main memory. The L2 cache unit circuitry 876 is coupled to one or more other levels of cache and eventually to a main memory.

The core 890 may support one or more instructions sets (e.g., the x86 instruction set (with some extensions that have been added with newer versions); the MIPS instruction set; the ARM instruction set (with optional additional extensions such as NEON)), including the instruction(s) described herein. In one embodiment, the core 890 includes logic to support a packed data instruction set extension (e.g., AVX1, AVX2), thereby allowing the operations used by many multimedia applications to be performed using packed data.

### Exemplary Execution Unit(s) Circuitry

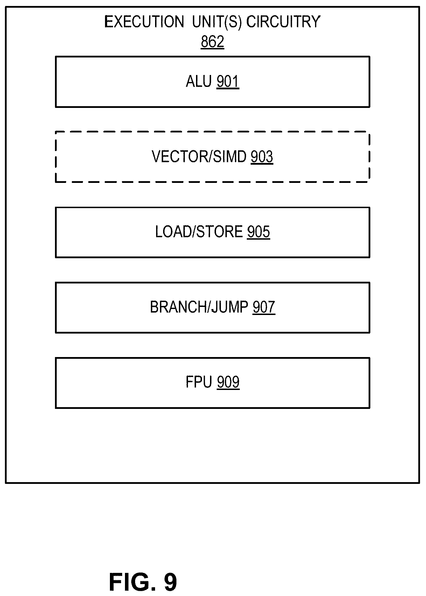

**FIG. 9** illustrates embodiments of execution unit(s) circuitry, such as execution unit(s) circuitry 862 of FIG. 8(B). As illustrated, execution unit(s) circuity 862 may include one or more ALU circuits 901, vector/SIMD unit circuits 903, load/store unit circuits 905, and/or branch/jump unit circuits 907. ALU circuits 901 perform integer arithmetic and/or Boolean operations. Vector/SIMD unit circuits 903 perform vector/SIMD operations on packed data (such as SIMD/vector registers). Load/store unit circuits 905 execute load and store instructions to load data from memory into registers or store from registers to memory. Load/store unit circuits 905 may also generate addresses. Branch/jump unit circuits 907 cause a branch or jump to a memory address depending on the instruction. FPU circuits 909 perform floating-point arithmetic. The width of the execution unit(s) circuitry 862 varies depending upon the embodiment and can range from 16-bit to 1,024-bit. In some embodiments, two or more smaller execution units are logically combined to form a larger execution unit (e.g., two 128-bit execution units are logically combined to form a 256-bit execution unit).

### Exemplary Register Architecture

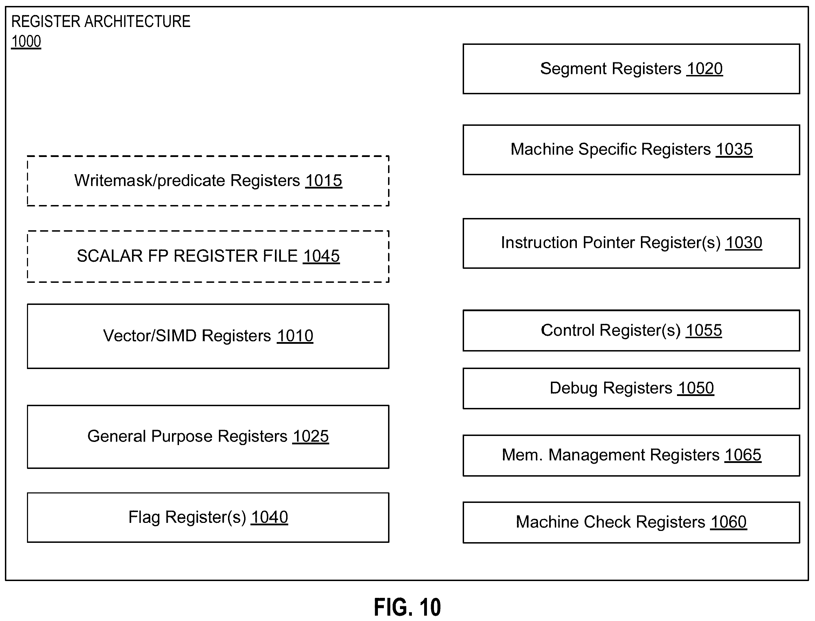

**FIG. 10** is a block diagram of a register architecture 1000 according to some embodiments. As illustrated, there are vector/SIMD registers 1010 that vary from 128-bit to 1,024 bits width. In some embodiments, the vector/SIMD registers 1010 are physically 512-bits and, depending upon the mapping, only some of the lower bits are used. For example, in some embodiments, the vector/SIMD registers 1010 are ZMM registers which are 512 bits: the lower 256 bits are used for YMM registers and the lower 128 bits are used for XMM registers. As such, there is an overlay of registers. In some embodiments, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the embodiment.

In some embodiments, the register architecture 1000 includes writemask/predicate registers 1015. For example, in some embodiments, there are 8 writemask/predicate registers (sometimes called k0 through k7) that are each 16-bit, 32-bit, 64-bit, or 128-bit in size. Writemask/predicate registers 1015 may allow for merging (e.g., allowing any set of elements in the destination to be protected from updates during the execution of any operation) and/or zeroing (e.g., zeroing vector masks allow any set of elements in the destination to be zeroed during the execution of any operation). In some embodiments, each data element position in a given writemask/predicate register 1015 corresponds to a data element position of the destination. In other embodiments, the writemask/predicate registers 1015 are scalable and consists of a set number of enable bits for a given vector element (e.g., 8 enable bits per 64-bit vector element).

The register architecture 1000 includes a plurality of general-purpose registers 1025. These registers may be 16-bit, 32-bit, 64-bit, etc. and can be used for scalar operations. In some embodiments, these registers are referenced by the names RAX, RBX, RCX, RDX, RBP, RSI, RDI, RSP, and R8 through R15.

In some embodiments, the register architecture 1000 includes scalar floating point register 1045 which is used for scalar floating-point operations on 32/64/80-bit floating point data using the x87 instruction set extension or as MMX registers to perform operations on 64-bit packed integer data, as well as to hold operands for some operations performed between the MMX and XMM registers.

One or more flag registers 1040 (e.g., EFLAGS, RFLAGS, etc.) store status and control information for arithmetic, compare, and system operations. For example, the one or more flag registers 1040 may store condition code information such as carry, parity, auxiliary carry, zero, sign, and overflow. In some embodiments, the one or more flag registers 1040 are called program status and control registers.

Segment registers 1020 contain segment points for use in accessing memory. In some embodiments, these registers are referenced by the names CS, DS, SS, ES, FS, and GS.

Machine specific registers (MSRs) 1035 control and report on processor performance. Most MSRs 1035 handle system related functions and are not accessible to an application program. Machine check registers 1060 consist of control, status, and error reporting MSRs that are used to detect and report on hardware errors.

One or more instruction pointer register(s) 1030 store an instruction pointer value. Control register(s) 1055 (e.g., CR0-CR4) determine the operating mode of a processor (e.g., processor 670, 680, 638, 618, and/or 700) and the characteristics of a currently executing task. Debug registers 1050 control and allow for the monitoring of a processor or core's debugging operations.

Memory management registers 1065 specify the locations of data structures used in protected mode memory management. These registers may include a GDTR, IDRT, task register, and a LDTR register.

Alternative embodiments of the invention may use wider or narrower registers. Additionally, alternative embodiments of the invention may use more, less, or different register files and registers.

### Instruction Sets

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands.

### Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

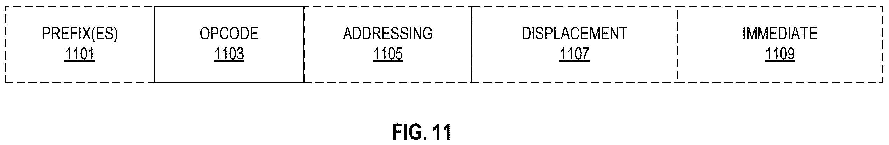

**FIG. 11** illustrates embodiments of an instruction format. As illustrated, an instruction may include multiple components including, but not limited to one or more fields for: one or more prefixes 1101, an opcode 1103, addressing information 1105 (e.g., register identifiers, memory addressing information, etc.), a displacement value 1107, and/or an immediate 1109. Note that some instructions utilize some or all of the fields of the format whereas others may only use the field for the opcode 1103. In some embodiments, the order illustrated is the order in which these fields are to be encoded, however, it should be appreciated that in other embodiments these fields may be encoded in a different order, combined, etc.

The prefix(es) field(s) 1101, when used, modifies an instruction. In some embodiments, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 1103 is used to at least partially define the operation to be performed upon a decoding of the instruction. In some embodiments, a primary opcode encoded in the opcode field 1103 is 1, 2, or 3 bytes in length. In other embodiments, a primary opcode can be a different length. An additional 3-bit opcode field is sometimes encoded in another field.

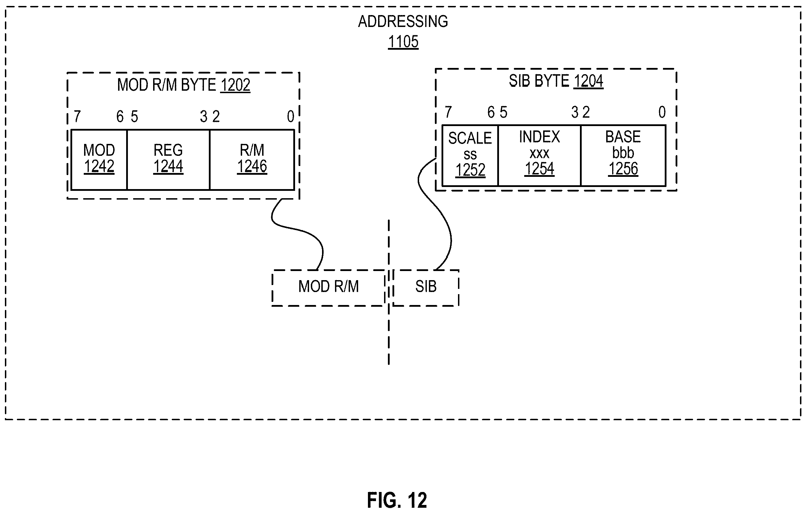

The addressing field 1105 is used to address one or more operands of the instruction, such as a location in memory or one or more registers. **FIG. 12** illustrates embodiments of the addressing field 1105. In this illustration, an optional ModR/M byte 1202 and an optional Scale, Index, Base (SIB) byte 1204 are shown. The ModR/M byte 1202 and the SIB byte 1204 are used to encode up to two operands of an instruction, each of which is a direct register or effective memory address. Note that each of these fields are optional in that not all instructions include one or more of these fields. The MOD R/M byte 1202 includes a MOD field 1242, a register field 1244, and R/M field 1246.

The content of the MOD field 1242 distinguishes between memory access and non-memory access modes. In some embodiments, when the MOD field 1242 has a value of b11, a register-direct addressing mode is utilized, and otherwise register-indirect addressing is used.

The register field 1244 may encode either the destination register operand or a source register operand, or may encode an opcode extension and not be used to encode any instruction operand. The content of register index field 1244, directly or through address generation, specifies the locations of a source or destination operand (either in a register or in memory). In some embodiments, the register field 1244 is supplemented with an additional bit from a prefix (e.g., prefix 1101) to allow for greater addressing.

The R/M field 1246 may be used to encode an instruction operand that references a memory address, or may be used to encode either the destination register operand or a source register operand. Note the R/M field 1246 may be combined with the MOD field 1242 to dictate an addressing mode in some embodiments.

The SIB byte 1204 includes a scale field 1252, an index field 1254, and a base field 1256 to be used in the generation of an address. The scale field 1252 indicates scaling factor. The index field 1254 specifies an index register to use. In some embodiments, the index field 1254 is supplemented with an additional bit from a prefix (e.g., prefix 1101) to allow for greater addressing. The base field 1256 specifies a base register to use. In some embodiments, the base field 1256 is supplemented with an additional bit from a prefix (e.g., prefix 1101) to allow for greater addressing. In practice, the content of the scale field 1252 allows for the scaling of the content of the index field 1254 for memory address generation (e.g., for address generation that uses 2^{scale} * index + base).

Some addressing forms utilize a displacement value to generate a memory address. For example, a memory address may be generated according to 2^{scale} * index + base + displacement, index*scale+displacement, r/m + displacement, instruction pointer (RIP/EIP) + displacement, register + displacement, etc. The displacement may be a 1-byte, 2-byte, 4-byte, etc. value. In some embodiments, a displacement field 1107 provides this value. Additionally, in some embodiments, a displacement factor usage is encoded in the MOD field of the addressing field 1105 that indicates a compressed displacement scheme for which a displacement value is calculated by multiplying disp8 in conjunction with a scaling factor N that is determined based on the vector length, the value of a b bit, and the input element size of the instruction. The displacement value is stored in the displacement field 1107.

In some embodiments, an immediate field 1109 specifies an immediate for the instruction. An immediate may be encoded as a 1-byte value, a 2-byte value, a 4-byte value, etc.

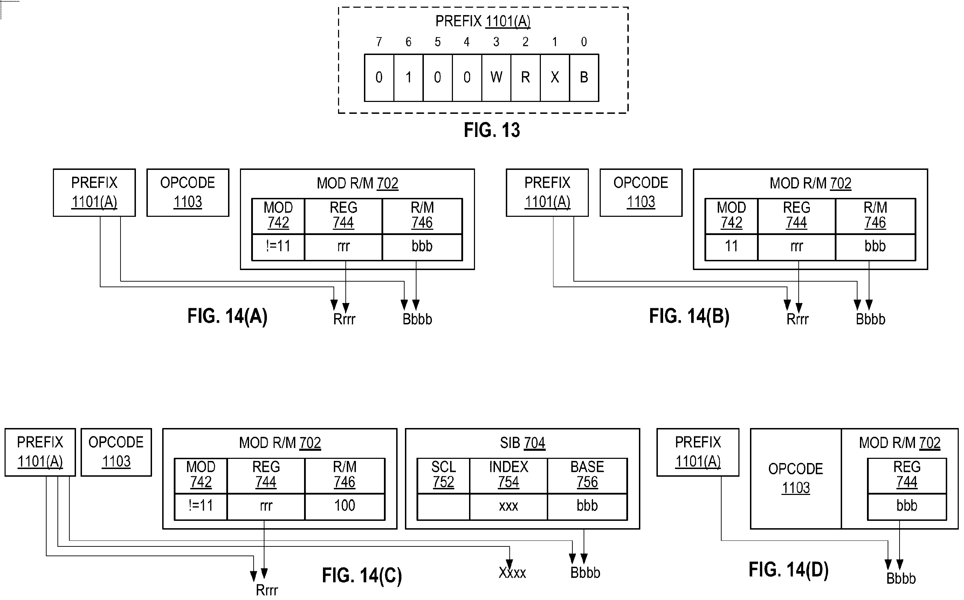

**FIG. 13** illustrates embodiments of a first prefix 1101(A). In some embodiments, the first prefix 1101(A) is an embodiment of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 1101(A) may specify up to three registers using 3-bit fields depending on the format: 1) using the reg field 1244 and the R/M field 1246 of the Mod R/M byte 1202; 2) using the Mod R/M byte 1202 with the SIB byte 1204 including using the reg field 1244 and the base field 1256 and index field 1254; or 3) using the register field of an opcode.

In the first prefix 1101(A), bit positions 7:4 are set as 0100. Bit position 3 (W) can be used to determine the operand size, but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 1244 and MOD R/M R/M field 1246 alone can each only address 8 registers.

In the first prefix 1101(A), bit position 2 (R) may an extension of the MOD R/M reg field 1244 and may be used to modify the ModR/M reg field 1244 when that field encodes a general purpose register, a 64-bit packed data register (e.g., a SSE register), or a control or debug register. R is ignored when Mod R/M byte 1202 specifies other registers or defines an extended opcode.

Bit position 1 (X) X bit may modify the SIB byte index field 1254.

Bit position B (B) B may modify the base in the Mod R/M R/M field 1246 or the SIB byte base field 1256; or it may modify the opcode register field used for accessing general purpose registers (e.g., general purpose registers 1025).

**FIGS. 14(A)****-(D)** illustrate embodiments of how the R, X, and B fields of the first prefix 1101(A) are used. **FIG. 14(A)** illustrates R and B from the first prefix 1101(A) being used to extend the reg field 1244 and R/M field 1246 of the MOD R/M byte 1202 when the SIB byte 1204 is not used for memory addressing. **FIG. 14(B)** illustrates R and B from the first prefix 1101(A) being used to extend the reg field 1244 and R/M field 1246 of the MOD R/M byte 1202 when the SIB byte 1204 is not used (register-register addressing). **FIG. 14(C)** illustrates R, X, and B from the first prefix 1101(A) being used to extend the reg field 1244 of the MOD R/M byte 1202 and the index field 1254 and base field 1256 when the SIB byte 1204 being used for memory addressing. **FIG. 14(D)** illustrates B from the first prefix 1101(A) being used to extend the reg field 1244 of the MOD R/M byte 1202 when a register is encoded in the opcode 1103.

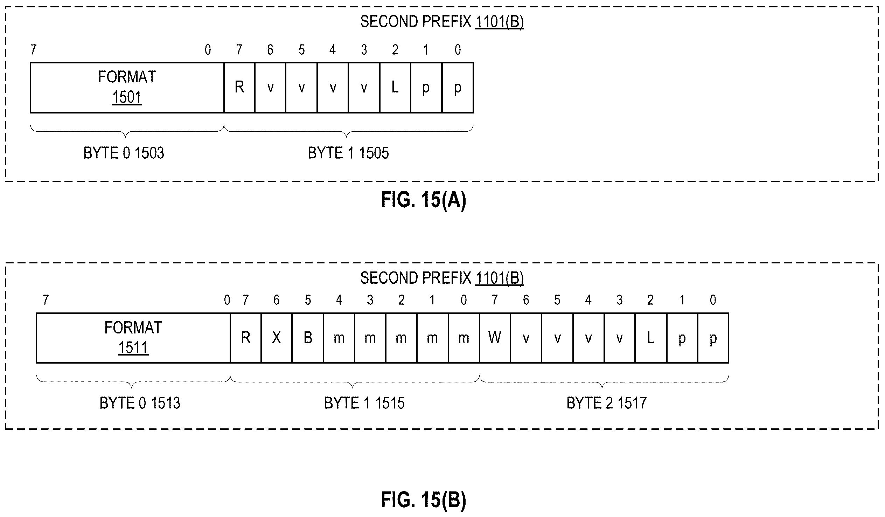

**FIGS. 15(A)****-(B)** illustrate embodiments of a second prefix 1101(B). In some embodiments, the second prefix 1101(B) is an embodiment of a VEX prefix. The second prefix 1101(B) encoding allows instructions to have more than two operands, and allows SIMD vector registers (e.g., vector/SIMD registers 1010) to be longer than 64-bits (e.g., 128-bit and 256-bit). The use of the second prefix 1101(B) provides for three-operand (or more) syntax. For example, previous two-operand instructions performed operations such as A = A + B, which overwrites a source operand. The use of the second prefix 1101(B) enables operands to perform nondestructive operations such as A = B + C.

In some embodiments, the second prefix 1101(B) comes in two forms - a two-byte form and a three-byte form. The two-byte second prefix 1101(B) is used mainly for 128-bit, scalar, and some 256-bit instructions; while the three-byte second prefix 1101(B) provides a compact replacement of the first prefix 1101(A) and 3-byte opcode instructions.

**FIG. 15(A)** illustrates embodiments of a two-byte form of the second prefix 1101(B). In one example, a format field 1501 (byte 0 1503) contains the value C5H. In one example, byte 1 1505 includes a "R" value in bit[7]. This value is the complement of the same value of the first prefix 1101(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (Is complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 1246 to encode the instruction operand that references a memory address or encode either the destination register operand or a source register operand.

Instructions that use this prefix may use the Mod R/M reg field 1244 to encode either the destination register operand or a source register operand, be treated as an opcode extension and not used to encode any instruction operand.

For instruction syntax that support four operands, vvvv, the Mod R/M R/M field 1246, and the Mod R/M reg field 1244 encode three of the four operands. Bits[7:4] of the immediate 1109 are then used to encode the third source register operand.

**FIG. 15(B)** illustrates embodiments of a three-byte form of the second prefix 1101(B). in one example, a format field 1511 (byte 0 1513) contains the value C4H. Byte 1 1515 includes in bits[7:5] "R," "X," and "B" which are the complements of the same values of the first prefix 1101(A). Bits[4:0] of byte 1 1515 (shown as mmmmm) include content to encode, as need, one or more implied leading opcode bytes. For example, 00001 implies a 0FH leading opcode, 00010 implies a 0F38H leading opcode, 00011 implies a leading 0F3AH opcode, etc.

Bit[7] of byte 2 1517 is used similar to W of the first prefix 1101(A) including helping to determine promotable operand sizes. Bit[2] is used to dictate the length (L) of the vector (where a value of 0 is a scalar or 128-bit vector) and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (Is complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 1246 to encode the instruction operand that references a memory address or encode either the destination register operand or a source register operand.

Instructions that use this prefix may use the Mod R/M reg field 1244 to encode either the destination register operand or a source register operand, be treated as an opcode extension and not used to encode any instruction operand.

For instruction syntax that support four operands, vvvv, the Mod R/M R/M field 1246, and the Mod R/M reg field 1244 encode three of the four operands. Bits[7:4] of the immediate 1109 are then used to encode the third source register operand.

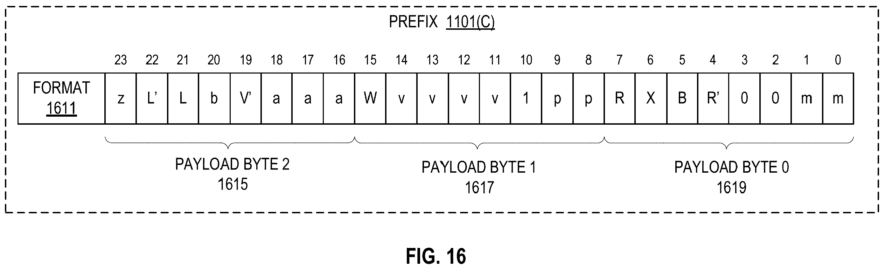

**FIG. 16** illustrates embodiments of a third prefix 1101(C). In some embodiments, the first prefix 1101(A) is an embodiment of an EVEX prefix. The third prefix 1101(C) is a four-byte prefix.

The third prefix 1101(C) can encode 32 vector registers (e.g., 128-bit, 256-bit, and 512-bit registers) in 64-bit mode. In some embodiments, instructions that utilize a writemask/opmask (see discussion of registers in a previous figure, such as FIG. 10) or predication utilize this prefix. Opmask register allow for conditional processing or selection control. Opmask instructions, whose source/destination operands are opmask registers and treat the content of an opmask register as a single value, are encoded using the second prefix 1101(B).

The third prefix 1101(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 1101(C) is a format field 1611 that has a value, in one example, of 62H. Subsequent bytes are referred to as payload bytes 1615-1619and collectively form a 24-bit value of P[23:0] providing specific capability in the form of one or more fields (detailed herein).

In some embodiments, P[1:0] of payload byte 1619 are identical to the low two mmmmm bits. P[3:2] are reserved in some embodiments. Bit P[4] (R') allows access to the high 16 vector register set when combined with P[7] and the ModR/M reg field 1244. P[6] can also provide access to a high 16 vector register when SIB-type addressing is not needed. P[7:5] consist of an R, X, and B which are operand specifier modifier bits for vector register, general purpose register, memory addressing and allow access to the next set of 8 registers beyond the low 8 registers when combined with the ModR/M register field 1244 and ModR/M R/M field 1246. P[9:8] provide opcode extensionality equivalent to some legacy prefixes (e.g., 00 = no prefix, 01 = 66H, 10 = F3H, and 11 = F2H). P[10] in some embodiments is a fixed value of 1. P[14:11], shown as vvvv, may be used to: 1) encode the first source register operand, specified in inverted (Is complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 1101(A) and second prefix 1111(B) and may serve as an opcode extension bit or operand size promotion.

P[18:16] specify the index of a register in the opmask (writemask) registers (e.g., writemask/predicate registers 1015). In one embodiment of the invention, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While embodiments of the invention are described in which the opmask field's content selects one of a number of opmask registers that contains the opmask to be used (and thus the opmask field's content indirectly identifies that masking to be performed), alternative embodiments instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Exemplary embodiments of encoding of registers in instructions using the third prefix 1101(C) are detailed in the following tables.

**32-Register Support in 64-bit Mode**

| | **4** | **3** | **[2:0]** | **REG. TYPE** | **COMMON USAGES** |
|---|---|---|---|---|---|
| **REG** | R' | R | ModR/M reg | GPR, Vector | Destination or Source |
| **VVVV** | V' | vvvv | | GPR, Vector | 2nd Source or Destination |
| **RM** | X | B | ModR/M R/M | GPR, Vector | 1st Source or Destination |
| **BASE** | 0 | B | ModR/M R/M | GPR | Memory addressing |
| **INDEX** | 0 | X | SIB .index | GPR | Memory addressing |
| **VIDX** | V' | X | SIB.index | Vector | VSIB memory addressing |

**Encoding Register Specifiers in 32-bit Mode**

| | **[2:0]** | **REG. TYPE** | **COMMON USAGES** |
|---|---|---|---|
| **REG** | ModR/M reg | GPR, Vector | Destination or Source |
| **VVVV** | vvvv | GPR, Vector | 2nd Source or Destination |
| **RM** | ModR/M R/M | GPR, Vector | 1 st Source or Destination |
| **BASE** | ModR/M R/M | GPR | Memory addressing |
| **INDEX** | SIB.index | GPR | Memory addressing |
| **VIDX** | SIB.index | Vector | VSIB memory addressing |

**Opmask Register Specifier Encoding**

| | **[2:0]** | **REG. TYPE** | **COMMON USAGES** |
|---|---|---|---|
| **REG** | ModR/M Reg | k0-k7 | Source |
| **VVVV** | vvvv | k0-k7 | 2nd Source |
| **RM** | ModR/M R/M | k0-7 | 1st Source |
| **{k1]** | aaa | k0¹-k7 | Opmask |

Program code may be applied to input instructions to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

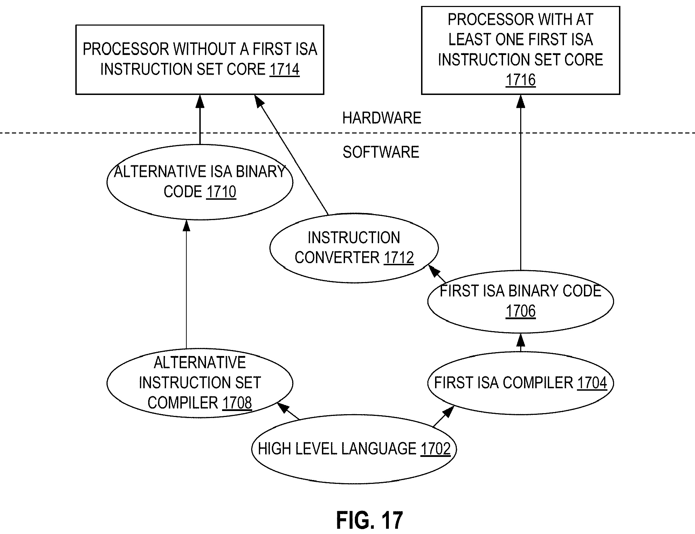

**FIG. 17** illustrates a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. **FIG. 17** shows a program in a high level language 1702 may be compiled using a first ISA compiler 1704 to generate first ISA binary code 1706 that may be natively executed by a processor with at least one first instruction set core 1716. The processor with at least one first ISA instruction set core 1716 represents any processor that can perform substantially the same functions as an Intel^{®} processor with at least one first ISA instruction set core by compatibly executing or otherwise processing (1) a substantial portion of the instruction set of the first ISA instruction set core or (2) object code versions of applications or other software targeted to run on an Intel processor with at least one first ISA instruction set core, in order to achieve substantially the same result as a processor with at least one first ISA instruction set core. The first ISA compiler 1704 represents a compiler that is operable to generate first ISA binary code 1706 (e.g., object code) that can, with or without additional linkage processing, be executed on the processor with at least one first ISA instruction set core 1716. Similarly, **FIG. 17** shows the program in the high level language 1702 may be compiled using an alternative instruction set compiler 1708 to generate alternative instruction set binary code 1710 that may be natively executed by a processor without a first ISA instruction set core 1714. The instruction converter 1712 is used to convert the first ISA binary code 1706 into code that may be natively executed by the processor without a first ISA instruction set core 1714. This converted code is not likely to be the same as the alternative instruction set binary code 1710 because an instruction converter capable of this is difficult to make; however, the converted code will accomplish the general operation and be made up of instructions from the alternative instruction set. Thus, the instruction converter 1712 represents software, firmware, hardware, or a combination thereof that, through emulation, simulation or any other process, allows a processor or other electronic device that does not have a first ISA instruction set processor or core to execute the first ISA binary code 1706.

### Further Examples

**Example 1** provides an apparatus comprising: decoder circuitry to decode a single instruction, the single instruction to include a field for an identifier of a first source operand, a field for an identifier of a second source operand, a field for an identifier of a third source operand, and a field for an opcode, the opcode to indicate that execution circuitry is to perform multiplication on a pair of data elements from the first source operand and the second source operand to produce a product data element via a shift operation when at least one data element in the pair of data elements is equal to or near a power of two; and execution circuitry to execute the decoded instruction according to the opcode.

**Example 2** includes the substance of the exemplary apparatus of **Example 1,** wherein the execution circuitry is further to: perform an addition of the product data element to a corresponding data element from the third source operand to produce a result data element; and store the result data element in a corresponding position in a destination source operand.

**Example 3** includes the substance of the exemplary apparatus of any one of the preceding examples, wherein the destination operand is the first source operand.

**Example 4** includes the substance of the exemplary apparatus of any one of the preceding examples, wherein a first data element from the pair of data elements is a power of two when the first data element is equal to the power of two and the first data element is near the power of two when the separation between the first data element and the power of two is within a threshold.

**Example 5** includes the substance of the exemplary apparatus of any one of the preceding examples, wherein the shift operation includes shifting a second data element from the pair of data elements based on the power of two.

**Example 6** includes the substance of the exemplary apparatus of any one of the preceding examples, wherein the shift operation shifts the radix point of the second data element to the right a number of positions equal to the power of two.

**Example 7** includes the substance of the exemplary apparatus of any one of the preceding examples, wherein the first source operand and the second source operand include packed data.

**Example 8** provides a method comprising: receiving an instruction, which indicates a first source operand and a second source operand; determining whether a first data element from the first source operand is equal to a power of two or near the power of two; shifting, in response to determining that the first data element is equal to the power of two or near the power of two, a second data element from the second source operand based on the power of two to produce a product data element; and multiplying, in response to determining that the first data element is neither equal to the power of two or near the power of two, the first data element with the second data element to produce the product data element.

**Example 9** includes the substance of the exemplary method of **Example 8,** wherein the first data element is located at a position in the first source operand corresponding to a position of the second data element in the second source operation, and wherein the instruction further indicates a third source operand that includes a third data element located at a position in the third source operand corresponding to the position of the second data element in the second source operand.

**Example 10** includes the substance of the exemplary method of any one of the preceding examples, further comprising: performing an addition of the product data element to the third data element to produce a result data element; and storing the result data element in the corresponding position in a destination source operand.

**Example 11** includes the substance of the exemplary method of any one of the preceding examples, wherein the destination operand is the first source operand.

**Example 12** includes the substance of the exemplary method of any one of the preceding examples, wherein a first data element is a power of two when the first data element is equal to the power of two and the first data element is near the power of two when the separation between the first data element and the power of two is within a threshold.

**Example 13** includes the substance of the exemplary method of any one of the preceding examples, wherein the shifting shifts the radix point of the second data element to the right a number of positions equal to the power of two.

**Example 14** includes the substance of the exemplary method of any one of the preceding examples, wherein the first source operand and the second source operand include packed data.

**Example 15** provides a non-transitory machine-readable medium having program code stored thereon which, when executed by a machine, causes the machine to perform the operations of: receiving an instruction, which indicates a first source operand and a second source operand; determining whether a first data element from the first source operand is equal to a power of two or near the power of two; shifting, in response to determining that the first data element is equal to the power of two or near the power of two, a second data element from the second source operand based on the power of two to produce a product data element; and multiplying, in response to determining that the first data element is neither equal to the power of two or near the power of two, the first data element with the second data element to produce the product data element.

**Example 16** includes the substance of the exemplary non-transitory machine-readable medium of **Example 15,** wherein the first data element is located at a position in the first source operand corresponding to a position of the second data element in the second source operation, and wherein the instruction further indicates a third source operand that includes a third data element located at a position in the third source operand corresponding to the position of the second data element in the second source operand.

**Example 17** includes the substance of the exemplary non-transitory machine-readable medium of any one of the preceding examples, wherein the operations further include: performing an addition of the data element to the third data element to produce a result data element; and storing the result data element in the corresponding position in a destination source operand.

**Example 18** includes the substance of the exemplary non-transitory machine-readable medium of any one of the preceding examples, wherein the destination operand is the first source operand.

**Example 19** includes the substance of the exemplary non-transitory machine-readable medium of any one of the preceding examples, wherein a first data element is a power of two when the first data element is equal to the power of two and the first data element is near the power of two when the separation between the first data element and the power of two is within a threshold.

**Example 20** includes the substance of the exemplary non-transitory machine-readable medium of any one of the preceding examples, wherein the shifting shifts the radix point of the second data element to the right a number of positions equal to the power of two.

References to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Moreover, in the various embodiments described above, unless specifically noted otherwise, disjunctive language such as the phrase "at least one of A, B, or C" is intended to be understood to mean either A, B, or C, or any combination thereof (e.g., A, B, and/or C). As such, disjunctive language is not intended to, nor should it be understood to, imply that a given embodiment requires at least one of A, at least one of B, or at least one of C to each be present.

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. An apparatus comprising:
decoder circuitry to decode a single instruction, the single instruction to include a field for an identifier of a first source operand, a field for an identifier of a second source operand, a field for an identifier of a third source operand, and a field for an opcode, the opcode to indicate that execution circuitry is to perform multiplication on a pair of data elements from the first source operand and the second source operand to produce a product data element via a shift operation when at least one data element in the pair of data elements is equal to or near a power of two; and
execution circuitry to execute the decoded instruction according to the opcode.

2. The apparatus of claim 1, wherein the execution circuitry is further to:
perform an addition of the product data element to a corresponding data element from the third source operand to produce a result data element; and
store the result data element in a corresponding position in a destination source operand.

3. The apparatus of claim 2, wherein the destination operand is the first source operand.

4. The apparatus of any of claims 1-3, wherein a first data element from the pair of data elements is a power of two when the first data element is equal to the power of two and the first data element is near the power of two when the separation between the first data element and the power of two is within a threshold.

5. The apparatus of claim 4, wherein the shift operation includes shifting a second data element from the pair of data elements based on the power of two.

6. The apparatus of claim 5, wherein the shift operation shifts the radix point of the second data element to the right a number of positions equal to the power of two.

7. The apparatus of any of claims 1-6, wherein the first source operand and the second source operand include packed data.

8. A method comprising:
receiving an instruction, which indicates a first source operand and a second source operand;
determining whether a first data element from the first source operand is equal to a power of two or near the power of two;
shifting, in response to determining that the first data element is equal to the power of two or near the power of two, a second data element from the second source operand based on the power of two to produce a product data element; and
multiplying, in response to determining that the first data element is neither equal to the power of two or near the power of two, the first data element with the second data element to produce the product data element.

9. The method of claim 8, wherein the first data element is located at a position in the first source operand corresponding to a position of the second data element in the second source operation, and
wherein the instruction further indicates a third source operand that includes a third data
element located at a position in the third source operand corresponding to the position of the second data element in the second source operand.

10. The method of claim 9, further comprising:
performing an addition of the product data element to the third data element to produce a result data element; and
storing the result data element in the corresponding position in a destination source operand.

11. The method of claim 10, wherein the destination operand is the first source operand.

12. The method of any of claims 8-11, wherein a first data element is a power of two when the first data element is equal to the power of two and the first data element is near the power of two when the separation between the first data element and the power of two is within a threshold.

13. The method of claim 12, wherein the shifting shifts the radix point of the second data element to the right a number of positions equal to the power of two.

14. The method of any of claims 8-13, wherein the first source operand and the second source operand include packed data.

15. A non-transitory machine-readable medium having program code stored thereon which, when executed by a machine, causes the machine to perform a method of any of claims 8-14.
